# EUROPÄISCHE PATENTANMELDUNG

(11) **EP 1 209 416 A2**
(43) Veröffentlichungstag der Anmeldung: **29.05.2002**
(21) Anmeldenummer: 01126683.0
(22) Anmeldetag: 08.11.2001
(51) Int. Cl.: F23L 15/04

(54) **Verfharen und Vorrichtung zur Konditionierung von feuchter und staubbeladener Verbrennungsluft**

(30) Priorität: 27.11.2000 DE 10058762
(71) Anmelder: MARTIN GmbH für Umwelt- und Energietechnik, D-80807 München (DE)
(72) Erfinder: Martin, Johannes, 81929 München (DE); Augstein, Horst, 85778 Haimhausen (DE); Schloms, Henner-Siegbert, 87452 Altusried (DE)
(74) Vertreter: Zmyj, Erwin, Dipl.-Ing., Dipl.-Wirtsch.-Ing., European Patent Attorney

(57) **Zusammenfassung**

Bei einer Verbrennungsanlage, zu denen Feuerung (1) Verbrennungsluft über eine Leitung (9) zugeführt wird, ist in Strömungsrichtung (13) der Verbrennungsluft eine Mischkammer (12), ein Sauggebläse (10) und eine Luftvorwärmeinrichtung (11) vorgesehen. In die Mischkammer (12) wird erhitzte Luft aus der Luftvorwärmeinrichtung (11) zugeführt, so dass die angesaugte Verbrennungsluft und insbesondere die von ihr mitgeführten feuchten Staubteile getrocknet werden.

## Beschreibung

Die Erfindung bezieht sich auf ein Verfahren zur Konditionierung von feuchter und staubbeladener Verbrennungsluft bei Verbrennungsanlagen und insbesondere Abfallverbrennungsanlagen, bei dem die Verbrennungsluft aus einer staubhaltigen und feuchten Umgebung angesaugt und durch eine Luftvorwärmeinrichtung hindurch zur Feuerung gefördert wird. Die Erfindung betrifft auch eine Vorrichtung zur Durchführung des Verfahrens.

Bei dem Betrieb von Verbrennungsanlagen, bei dem die Verbrennungsluft aus einer staubhaltigen und feuchten Umgebung, bei Abfallverbrennungsanlagen beispielsweise aus dem Bunker für die Abfallstoffe angesaugt wird, tritt das Problem der Verschmutzung der Wärmetauscherflächen der verwendeten Verbrennungsluftvorwärmeinrichtungen auf. Solche Verbrennungsluftvorwärmeinrichtungen werden verwendet, um die Verbrennungsluft für die Feuerung vorzuwärmen und damit den Verbrennungsvorgang zu verbessern oder den Wirkungsgrad zu erhöhen. Die Wärmezufuhr erfolgt durch Heißwasser oder Dampf, der bei solchen Verbrennungsanlagen in der Regel erzeugt wird. Durch zunehmende Verschmutzung solcher Verbrennungsluftvorwärmeinrichtungen wird der Wärmeübergang zwischen den Heizflächen dieser Einrichtungen und der aufzuheizenden Verbrennungsluft verschlechtert und der Strömungswiderstand durch diese Verbrennungsluftvorwärmeinrichtungen erhöht, was zu einem Anstieg der Antriebsleistung für das Gebläse der Verbrennungsluft führt. Um solche Verschmutzungen zu beseitigen, werden Reinigungseinrichtungen wie Pressluft- oder Dampfbläser, rotierende Reinigungsbürsten und Bypasskanäle zur Verbrennungsluftvorwärmeinrichtung vorgesehen. Die Bypassströmung zur Verbrennungsluftvorwärmeinrichtung verläuft dabei parallel und gleichsinnig zur Luftströmung durch diese Luftvorwärmeinrichtung. Die Verschlechterung des Verbrennungsvorganges oder des Wirkungsgrades der Verbrennungsluftvorwärmeinrichtung bei Bypassbetrieb wird zwangsläufig in Kauf genommen. Die Verschmutzung wird damit nicht verhindert bzw. entfernt, sondern der notwendige Reinigungsvorgang wird nur zeitlich aufgeschoben. Dieser Reinigungsvorgang muss spätestens durchgeführt werden, wenn die Leistungsreserve des Gebläses erschöpft ist.

Zu dieser äußerst störenden und mit den erwähnten Nachteilen behafteten Verschmutzung der Verbrennungsluftvorwärmeinrichtung kommt es deshalb, weil die feuchten Staubteilchen an den heißen Wärmetauscherflächen kleben bleiben. Diese Feuchtigkeit an der Oberfläche der Staubteilchen hat verschiedene Ursachen. Die eine Ursache besteht darin, dass trotz trockner Oberfläche die Staubteilchen im Inneren noch feucht sind und diese Feuchtigkeit beim Auftreffen auf die Wärmertauscherflächen an die Oberfläche gelangt und diese wieder befeuchtet, was zu dem erwähnten Ankleben führt. Eine weitere Ursache ist darin zu sehen, dass beim Verdunsten des Wassers an der Oberfläche der Staubteilchen eine Abkühlung der Verbrennungsluft erfolgt, was zu einer lokalen Taupunktunterschreitung der vorzuwärmenden Luft führt. Bei einer Taupunktunterschreitung fällt aber Feuchtigkeit aus der Luft aus und diese Feuchtigkeit führt dann wieder zu einer Befeuchtung der Staubteilchen, so dass ein Anbacken dieser Staubteilchen an den Wärmetauscherflächen unvermeidbar ist.

Aufgabe der Erfindung ist es, ein Verfahren und eine Vorrichtung bereitzustellen, mit deren Hilfe die Verschmutzung der Verbrennungsluftvorwärmeinrichtung weitgehend vermieden werden kann.

Diese Aufgabe wird bei einem Verfahren der eingangs erläuterten Art erfindungsgemäß dadurch gelöst, dass der angesaugten Verbrennungsluft vor dem Eintritt in die Luftvorwärmeinrichtung erhitzte Luft beigemischt wird. Diese Maßnahme hat auf jeden Fall zur Folge, dass die feuchten Staubpartikel soweit abgetrocknet werden, dass sie nicht mehr oder nur in sehr geringem Umfange an den Wärmetauscherflächen der Luftvorwärmeinrichtung haften bleiben. Hierdurch sind die eingangs erläuterten Probleme weitgehend bis vollständig beseitigt und damit letzten Endes auch der Gesamtwirkungsgrad der Verbrennungsanlage gesichert.

Um das vorgeschlagene Verfahren für großtechnische Verbrennungsanlagen in reproduzierbarer Weise handhaben zu können, ist es in Weiterbildung der Erfindung vorteilhaft, wenn mindestens einer der Parameter Temperatur, relative Luftfeuchtigkeit und Druck der angesaugten Verbrennungsluft vor und/oder nach der Beimischung gemessen und als Regelgröße für die Bestimmung mindestens eines der Parameter Menge, Temperatur, relative Luftfeuchtigkeit und Druck der erhitzten Beimischluft verwendet wird. Vorzugsweise wird die Temperatur und die relative Luftfeuchtigkeit der angesaugten Verbrennungsluft vor und nach der Beimischung der erhitzten Luft gemessen und hieraus die notwendigen Maßnahmen für den Regelungsvorgang abgeleitet. Insbesondere wird hierdurch die Menge der beizumischenden erhitzten Luft bestimmt.

In vorteilhafter Weise wird als Beimischluft Luft aus der Luftvorwärmeinrichtung verwendet. Hierbei wird die in der Luftvorwärmeinrichtung erhitzte Luft über einen Bypass abgezweigt und der angesaugten Verbrennungsluft vor dem Eintreten in die Luftvorwärmeinrichtung beigemischt. Diese Maßnahme hat neben der Erzielung der angestrebten Trocknung der Staubteilchen auch noch den weiteren Vorteil, dass die in der erhitzten Verbrennungsluft enthaltenen trocknen Staubteilchen sich an denjenigen Staubteilchen anlagern, die noch nicht vollständig getrocknet sind, so dass diese noch nicht getrockneten Staubteilchen mit einer Schicht getrockneter Staubteilchen umgeben werden, was dazu führt, dass die Neigung zum Anbacken an den heißen Wärmetauscherflächen reduziert wird.

Wenn die angesaugte Verbrennungsluft in besonders starkem Maße mit Staub beladen ist, kann es vorteilhaft sein, nach der Zuführung von erhitzter Beimischluft zur angesaugten Verbrennungsluft und vor der Einführung dieser gemischten Verbrennungsluft in die Luftvorwärmeinrichtung eine Staubabscheidung vorzunehmen. Bereits getrocknete Staubteilchen sind problemloser, beispielsweise durch einen Filter abzuscheiden als feuchte Staubteilchen.

Eine Vorrichtung zur Durchführung des Verfahrens ist dadurch gekennzeichnet, dass innerhalb einer Mischkammer quer zur Strömungsrichtung der Verbrennungsluft verlaufende, endseitig geschlossene Zuführungsrohre für die Beimischluft angeordnet sind, die Austrittsöffnungen für die Beimischluft aufweisen. Dabei tritt die erhitzte Beimischluft aus den Öffnungen der Zuführungsrohre aus und vermischt sich gleichmäßig mit der durch die Mischkammer hindurchströmenden, angesaugten Verbrennungsluft.

Eine bevorzugte Ausführungsform der Vorrichtung zur Beimischung von erhitzter Beimischluft zur angesaugten Verbrennungsluft ist dadurch gekennzeichnet, dass jedes Zuführungsrohr mit drei Reihen von Luftschlitzen versehen ist, die auf dem Umfang gegenseitig um jeweils 120° versetzt sind, wobei eine Reihe der Luftschlitze an der in Strömungshauptrichtung der Verbrennungsluft abgelegenen Seite des Zuführungsrohres vorgesehen ist, dass ein in Strömungshauptrichtung der Verbrennungsluft konisch sich verjüngender Mantel am Zuführungsrohr angeordnet ist, der zusammen mit dem Zuführungsrohr einen tropfenförmigen Strömungskörper bildet und dass am verjüngten Ende des Mantels eine Reihe von Luftschlitzen ausgebildet ist. Bei der erwähnten Anordnung von Reihen von Luftschlitzen sind zwei Reihen von Luftschlitzen unter einem Winkel von jeweils 60° gegen die Hauptströmungsrichtung der angesaugten Verbrennungsluft gerichtet, so dass hier nahezu im Gegenstromprinzip eine Vermischung der austretenden erhitzten Beimischluft mit der angesaugten Verbrennungsluft erfolgt. Durch die schräge Anstellung der Ausblasrichtung der beiden oberen Reihen der Luftschlitze wird die angesaugte Verbrennungsluft um das Zuführungsrohr herumgelegt und durch den angeordneten, konisch sich verjüngenden Mantel in strömungsgünstiger Weise abgeleitet. Durch die in Strömungsrichtung abgewandte Anordnung der Luftschlitze wird der sich konisch verjüngende Mantel erhitzt und begrenzt eine Kammer, in welcher die von der erhitzten Beimischluft mitgeführten Staubteilchen ausfallen können. Durch die am Ende des verjüngten Mantels angeordneten Luftschlitze tritt dann dieser Anteil der Beimischluft aus und nimmt dann auch die abgeschiedenen Staubteilchen mit. Die Mantelflächen bilden eine Wärmetauscherfläche für die Erwärmung der angesaugten Verbrennungsluft.

Eine bevorzugte Ausgestaltung der Vorrichtung ist dadurch gekennzeichnet, dass die Zuführungsrohre in horizontaler Richtung mit nach unten ausgerichteten Mänteln innerhalb der Mischkammer angeordnet sind und dass die Strömungsrichtung der Verbrennungsluft innerhalb der Mischkammer von oben nach unten verläuft.

Die Erfindung wird nachfolgend anhand eines in der Zeichnung dargestellten Ausführungsbeispieles näher erläutert. In der Zeichnung zeigen:

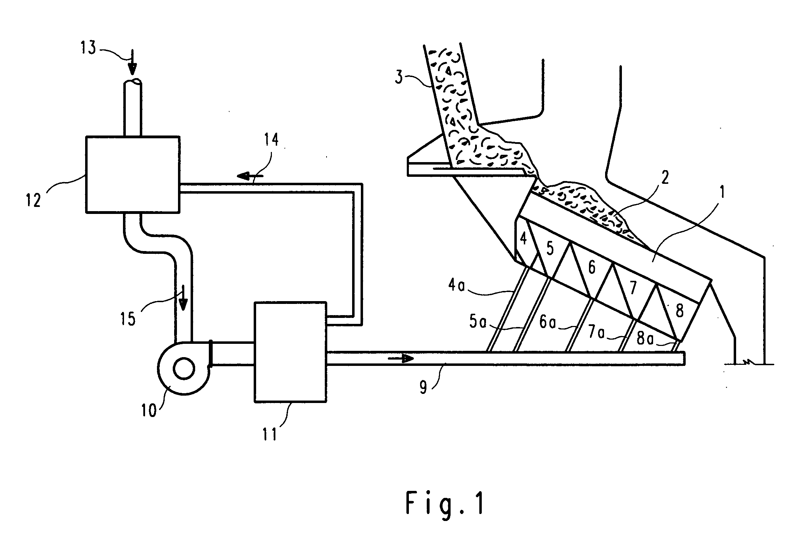

- **Figur 1:**: eine schematische Ansicht einer Verbren-nungsanlage für Abfallstoffe mit einer Luftvorwärmeinrichtung und einer Vorrichtung zur Beimischung von erhitzter Luft zur Verbrennungsluft und
- **Figur 2:**: eine schematische Darstellung der Vorrichtung zur Beimischung von erhitzter Luft zur angesaugten Verbrennungsluft.

Bei einer Abfallverbrennungsanlage mit einer Feuerung 1, einem darauf befindlichen Brennbett 2 aus Abfallstoffen, einer Aufgabeschurre 3 und einzelnen Unterwindkammer 4 bis 8 wird Verbrennungsluft aus einer Sammelleitung 9 über die einzelnen Verteilerleitungen 4a bis 8a zugeführt. Diese Verbrennungsluft wird mittels eines Sauggebläses 10 angesaugt und durch eine Luftvorwärmeinrichtung 11 hindurchgedrückt, in welcher die angesaugte Verbrennungsluft auf etwa 140°C erhitzt wird. Damit diese aus einer staubhaltigen und feuchten Umgebung angesaugte Verbrennungsluft nicht zu einer Verschmutzung der Luftvorwärmeinrichtung 11 führen kann, ist eine Mischkammer 12 vorgesehen, in welche die angesaugte Verbrennungsluft in Richtung des Pfeiles 13 gelangt. In diese Mischkammer 12 wird erhitzte Luft aus der Luftvorwärmeinrichtung 11 abgezweigt und in Richtung des Pfeiles 14 der Mischkammer zugeführt. Die gemischte Luft, die von dem Gebläse 10 angesaugt und dann über die Luftvorwärmeinrichtung 11 zum Feuerungsrost gefördert wird, verlässt die Mischkammer in Richtung des Pfeiles 15.

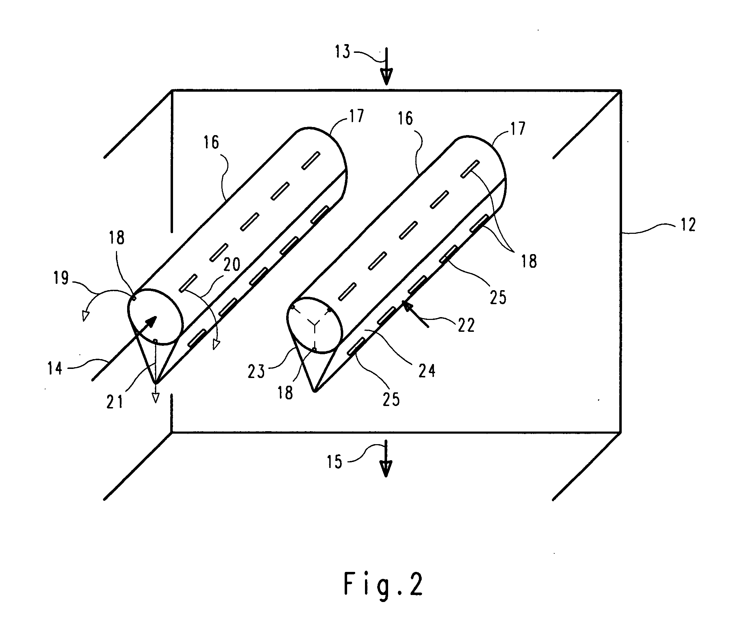

Innerhalb der Mischkammer 12, sind, wie aus Figur 2 ersichtlich, Zuführungsrohre 16 quer zur Hauptströmungsrichtung der angesaugten Luft angeordnet, wobei die Hauptströmungsrichtung, wie durch den Pfeil 13 und den Pfeil 15 angedeutet, in vertikaler Richtung von oben nach unten verläuft. Die Zuführungsrohre 16 sind an ihrem hinteren Ende 17 verschlossen und weisen drei Reihen von Luftaustrittsschlitzen 18 auf, die jeweils um 120° zueinander am Umfang der Zuführungsrohre 16 verteilt sind. Eine Reihe der Luftaustrittschlitze 18 ist in vertikaler Richtung unten angeordnet, d.h. an der der Strömungshauptrichtung der angesaugten Verbrennungsluft abgewandten Seite des Zuführungsrohres 16. Demnach sind die beiden anderen Reihen der Luftaustrittsschlitze 18 um jeweils 60° gegenüber der Vertikalen geneigt angeordnet, so dass die entsprechend dem Pfeil 14 angedeutete, zugeführte heiße Beimischluft in Richtung der Pfeile 19, 20 und 21 aus dem Zuführungsrohr 16 austritt. Die Strömungspfeile 19 und 20 sind dabei gegen und in Uhrzeigerrichtung gebogen, was sich aus der Vermischung der austretenden heißen Beimischluft mit der angesaugten Verbrennungsluft ergibt, die in Richtung des Pfeiles 13 der Mischkammer 12 zugeführt wird. Die an der Unterseite des Zuführungsrohres 16 austretende und durch den Pfeil 21 bezeichnete Beimischluft erwärmt einen Mantel 22, der aus zwei konisch zueinander angestellten Blechteilen 23 und 24 gebildet ist und in Verbindung mit jedem Zuführungsrohr 16 einen tropfenförmigen Strömungskörper bildet, wobei der Mantel 22 in Strömungshauptrichtung entsprechend den Pfeilen 13 und 15 ausgerichtet ist. Die beiden Mantelflächen 23 und 24, die durch die austretende erhitzte Beimischluft 21 erwärmt werden, dienen dabei als Wärmetauscherflächen. Die erhitzte Beimischluft tritt aus unteren Luftschlitzen 25, die am unteren Ende des Mantels 22 angeordnet sind, aus.

## Patentansprüche

1. Verfahren zur Konditionierung von feuchter und staubbeladener Verbrennungsluft bei Verbrennungsanlagen und insbesondere Abfallverbrennungsanlagen, bei dem die Verbrennungsluft aus einer staubhaltigen und feuchten Umgebung angesaugt und durch eine Luftvorwärmeinrichtung hindurch zur Feuerung gefördert wird, **dadurch gekennzeichnet, dass** der angesaugten Verbrennungsluft vor dem Eintreten in die Luftvorwärmeinrichtung erhitzte Luft beigemischt wird.

2. Verfahren nach Anspruch 1, **dadurch gekennzeichnet, dass** mindestens einer der Parameter Temperatur, relative Luftfeuchtigkeit und Druck der angesaugten Verbrennungsluft vor und/oder nach der Beimischung gemessen und als Regelgröße für die Bestimmung mindestens eines der Parameter Menge, Temperatur, relative Luftfeuchtigkeit und Druck der erhitzten Beimischluft verwendet wird.

3. Verfahren nach Anspruch 1 oder 2, **dadurch gekennzeichnet, dass** als Beimischluft Luft aus der Luftvorwärmeinrichtung verwendet wird.

4. Verfahren nach einem der Ansprüche 1 bis 3, **dadurch gekennzeichnet, dass** nach der Zuführung von erhitzter Beimischluft zur angesaugten Verbrennungsluft und vor der Einführung dieser gemischten Verbrennungsluft zur Luftvorwärmeinrichtung eine Staubabscheidung vorgenommen wird.

5. Vorrichtung zur Durchführung des Verfahrens nach einem der Ansprüche 1 bis 4, **dadurch gekennzeichnet, dass** innerhalb einer Mischkammer (12) quer zur Strömungsrichtung (13) der Verbrennungsluft verlaufende, endseitig geschlossene Zuführungsrohre (16) für die Beimischluft angeordnet sind, die Austrittsöffnungen (18) für die Beimischluft aufweisen.

6. Vorrichtung nach Anspruch 5, **dadurch gekennzeichnet, dass** jedes Zuführungsrohr (16) mit drei Reihen von Luftschlitzen (18) versehen ist, die auf den Umfang gegenseitig um jeweils 120° versetzt sind, wobei eine Reihe der Luftschlitze an der in Strömungshauptrichtung der Verbrennungsluft abgelegenen Seite des Zuführungsrohres (16) vorgesehen ist, dass ein in Strömungshauptrichtung (13, 15) der Verbrennungsluft konisch sich verjüngender Mantel (22) am Zuführungsrohr (16) angeordnet ist, der zusammen mit dem Zuführungsrohr (16) einen tropfenförmigen Strömungskörper bildet und dass am verjüngten Ende des Mantels (22) eine Reihe von Luftschlitzen (25) ausgebildet ist.

7. Vorrichtung nach Anspruch 6, **dadurch gekennzeichnet, dass** die Zuführungsrohre (16) in horizontaler Richtung mit nach unten ausgerichteten Mänteln (22) innerhalb der Mischkammer (12) angeordnet sind und dass die Strömungsrichtung der Verbrennungsluft innerhalb der Mischkammer (12) von oben nach unten verläuft.
